# EUROPEAN PATENT APPLICATION

(11) **EP 4 744 862 A1**
(43) Date of publication of application: **20.05.2026**
(21) Application number: 25215200.4
(22) Date of filing: 12.11.2025
(51) Int. Cl.: B29C 53/04, B29C 70/44, B29C 70/56

(54) **TOOLING ASSEMBLY FOR FORMING AND CURING A COMPOSITE PREFORM IN A SINGLE PROCESS STEP AND A METHOD**

(30) Priority: 13.11.2024 US 202463719731 P; 20.06.2025 US 202519244485
(71) Applicant: The Boeing Company, Arlington, VA 22202 (US)
(72) Inventor: SERENCSITS, William Louis, ARLINGTON, 22202 (US); AUTRY, Byron James, ARLINGTON, 22202 (US)
(74) Representative: Plasseraud IP

(57) **Abstract**

A tooling assembly for forming and curing a composite preform in a single process step and a method of forming and curing the composite preform includes a composite material blank disposed on a platform. The tooling assembly includes a shape memory alloy (SMA) structure incorporated into the platform and configured to move in response to heating which changes a shape of the platform. The SMA structure is disposed in an initial state at a first threshold temperature when unheated and is disposed in a secondary state when heated via a heater to a second threshold temperature. The composite material blank is movable with the platform to a transformed state in response to the SMA structure moving to the secondary state to form and cure the composite material blank into the composite preform relative to the secondary state of the SMA structure.

## Description

### CROSS-REFERENCE

This Patent Application claims priority to U.S. Provisional Patent Application No. 63/719731, filed on November 13, 2024, and entitled "TOOLING ASSEMBLY FOR FORMING AND CURING A COMPOSITE PREFORM IN A SINGLE PROCESS STEP AND A METHOD."

### BACKGROUND

Current forming processes for composite materials may utilize deformable membranes and a vacuum to form a full stack of material at once. Generally, current forming processes implement one process step to transform the composite materials, and then a separate, independent, process step to cure the composite materials. This process may be time consuming or additional equipment may be required to complete the two separate forming and curing process steps.

### SUMMARY

Therefore, it is desirable to develop a tooling assembly and a method that improves manufacturing processes of forming and curing a composite preform, and other benefits are discussed herein.

The present disclosure pertains to a tooling assembly for forming and curing a composite preform in a single process step, wherein the tooling assembly is defined according to the appended independent claim 1.

The present disclosure also pertains to a method of forming and curing a composite preform in a single process step, wherein the method is defined according to the appended independent claim 7.

The detailed description and the drawings or FIGS. are supportive and descriptive of the disclosure, but the claim scope of the disclosure is defined solely by the claims. While some of the best modes and other configurations for carrying out the claims have been described in detail, various alternative designs and configurations exist for practicing the disclosure defined in the appended claims.

### BRIEF DESCRIPTION OF THE DRAWINGS

FIG. 1 is a schematic perspective view of part of a tooling assembly including a platform and a shape memory alloy (SMA) structure in an initial state, and a composite material blank in dash-dot-dot-dash lines disposed substantially flat over the platform and the SMA structure.
FIG. 2 is a schematic partial cross-sectional of the tooling assembly, with a heater illustrated in evenly spaced dashes.
FIG. 3 is a schematic perspective view of the platform and the SMA structure in a secondary state with the composite material blank in a transformed state in dash-dot-dot-dash lines, with the heater illustrated in evenly spaced dashes.
FIG. 4 is a schematic perspective view of the platform and the SMA structure in the initial state disposed on a frame, and the composite material blank in dash-dot-dot-dash lines disposed substantially flat over the platform and the SMA structure.
FIG. 5 is a schematic perspective view of the platform and the SMA structure in the secondary state complementing additional surfaces of the frame as compared to FIG. 4, with the composite material blank in the transformed state in dash-dot-dot-dash lines.
FIG. 6 is a schematic perspective view of the platform and the SMA structure in the initial state, with the SMA structure having a first group and a second group, with the composite material blank in dash-dot-dot-dash lines disposed substantially flat over the platform and the SMA structure.
FIG. 7 is a schematic perspective view of the platform and the SMA structure having the first group of the SMA structure in a first stage, with part of the composite material blank in the transformed state in dash-dot-dot-dash lines.
FIG. 8 is a schematic perspective view of the platform and the SMA structure having the second group of the SMA structure in a second stage, with the entire composite material blank in the transformed state in dash-dot-dot-dash lines.

The present disclosure may be extended to modifications and alternative forms, with representative configurations shown by way of example in the drawings and described in detail below. Inventive aspects of the disclosure are not limited to the disclosed configurations. Rather, the present disclosure is intended to cover modifications, equivalents, combinations, and alternatives falling within the scope of the disclosure as defined by the appended claims.

### DETAILED DESCRIPTION

Those having ordinary skill in the art will recognize that all directional references (e.g., above, below, upward, up, downward, down, top, bottom, left, right, vertical, horizontal, etc.) are used descriptively for the FIGS. to aid the reader's understanding, and do not represent limitations (for example, to the position, orientation, or use, etc.) on the scope of the disclosure, as defined by the appended claims. Moreover, terms such as "first," "second," "third," and so on, may be used to describe separate components. Such terminology may include the words specifically mentioned above, derivatives thereof, and words of similar import. Furthermore, the term "substantially" can refer to a slight imprecision or slight variance of a condition, quantity, value, or dimension, etc., some of which are within manufacturing variance or tolerance ranges.

As used herein, an element or step recited in the singular and preceded by the word "a" or "an" should be understood as not necessarily excluding the plural of the elements or steps. That is, "a", "an", "the", "at least one", and "one or more" are used interchangeably to indicate that at least one of the items is present and more than one may be present, unless stated otherwise. Further, any reference to "one configuration" is not intended to be interpreted as excluding the existence of additional configurations that also incorporate the recited features. Moreover, unless explicitly stated to the contrary, configurations "comprising" or "having" an element or a plurality of elements having a particular property may include additional elements not having that property. The phrase "at least one of" as used herein should be construed to include the non-exclusive logical "or", i.e., A and/or B and so on depending on the number of components.

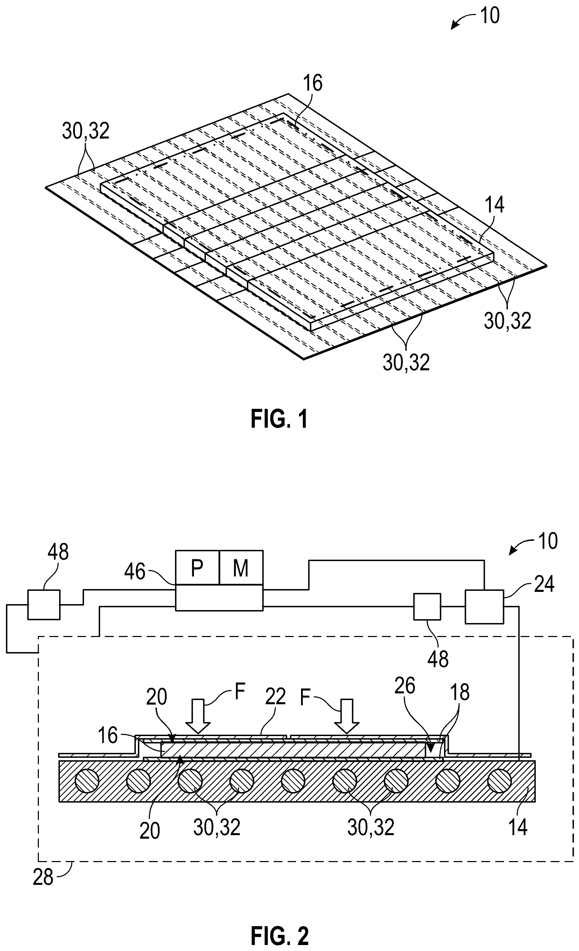

Referring to the figures, wherein like numerals indicate like or corresponding parts throughout the several views, a tooling assembly 10 for forming a composite preform 12 is generally shown in FIG. 1. That is, the tooling assembly 10 for forming and curing the composite preform 12 in a single process step. As such, the tooling assembly 10 described herein is implemented to form and cure the composite preform 12 in one process step, which may reduce cycling time and reduce complexity of the overall process.

The composite preform 12 may be any suitable configuration depending on the application. For example, the composite preform 12 may be configured as parts of an aircraft, a vehicle, a locomotive, a watercraft, a robot, farm equipment, or any other parts of a movable platform, whether autonomous or non-autonomous. As one example, if the composite preform 12 is for an aircraft application, the composite preform 12 may be for stringers, fuselage skins, stabilizers, wings, frames, spars, door components, etc. As other examples, the composite preform 12 may be configured as parts of a stationary platform, and non-limiting examples of a stationary platform may include farm equipment, buildings, generators, power grid equipment, or any other stationary platform.

Referring to FIG. 2, the tooling assembly 10 includes a platform 14 and a composite material blank 16 disposed on the platform 14. Generally, the composite material blank 16 and the platform 14 are disposed in a substantially flat orientation to start the forming process. That is, the composite material blank 16 is laid-up on the platform 14 to start the forming process. By starting the process as the composite material blank 16 being in the substantially flat orientation, handling complexities of the composite material blank 16 may be reduced, which may provide labor and cost savings.

Generally, the composite material blank 16/the composite preform 12 may include reinforced fibers. For example, the reinforced fibers may be a dry fiber material or a carbon fiber material, or any other suitable reinforced fibers. The reinforced fibers may include carbon, glass, or any other suitable fibers. If implementing the dry fibers, the dry fibers may be infused into a resin to form the composite material blank 16/the composite preform 12. Alternatively, the composite material blank 16/the composite preform 12 may include pre-impregnated fibers, such as carbon fiber, in a polymer resin, i.e., a prepreg.

The platform 14 is formed of a flexible material to allow the platform 14 to change orientations in response to the forming process, which is discussed further below. By forming the platform 14 as the flexible material, this allows the platform 14 to be bendable, deformable, and/or stretchable, without permanent deformation and without breaking, and thus, allows the platform 14 to move back and forth to the desired orientations, some of which will be discussed further below. As non-limiting examples, the flexible material of the platform 14 may include one or more of metal, such as steel, aluminum, or any other thin flexible metal; polymers such as silicone, urethane, or any other suitable flexible polymers; and any other suitable materials to allow the platform 14 to bend without permanent deformation.

Optionally, one or more release films 18 may be implemented to overlap one or more sides 20 of the composite material blank 16. In certain configurations, the composite material blank 16 is disposed between a pair of release films 18, as shown in FIG. 2. The release films 18 may be configured to filter volatiles from the composite material blank 16/the composite preform 12 during the forming and curing process.

Continuing with FIG. 2, the tooling assembly 10 also includes a membrane 22 disposed across the composite material blank 16 to contain the composite material blank 16 between the platform 14 and the membrane 22. When implementing the one or more release films 18, the membrane 22 overlaps the release films 18 and the composite material blank 16 such that the platform 14 and the membrane 22 contain the release films 18 and the composite material blank 16 therein. The membrane 22 is attached to the platform 14 such that the membrane 22 is sealed to the platform 14, and thus, prevents gaseous fluid leaks therebetween. As such, the membrane 22 and the platform 14 act to bag the composite material blank 16.

The membrane 22 may be formed of a flexible or deformable material to allow the membrane 22 to lay over various surfaces and elongate. Therefore, the membrane 22 may be formed as a sheet, a film, a membrane 22, etc. The flexible or deformable material of the membrane 22 may include one or more of nylons, urethanes, thermoplastic elastomers, copolymers, polytetrafluoroethylene (PTFE), etc.

The tooling assembly 10 may also include a vacuum 24 in fluid communication with a space 26 between the membrane 22 and the platform 14, and the vacuum 24 is configured to expel a gaseous fluid out of the space 26 to hold the composite material blank 16 against the platform 14. To temporarily secure the composite material blank 16 to the platform 14, the membrane 22 is suctioned toward the platform 14 when the vacuum 24 is creating a pressure difference, which applies a force F to the composite material blank 16 which pushes the composite material blank 16 into the platform 14. Therefore, while the vacuum 24 is activated, the composite material blank 16 remains secured to the platform 14 and may apply a compaction pressure to the composite material blank 16. Optionally, the vacuum 24 may have a plurality of zones in fluid communication with different locations within the space 26 in which one or more of the zones may be activated to adjust or tailor the amount of force F applied to the composite material blank 16 at the different locations.

Heat is applied to the composite material blank 16 to soften the composite material blank 16 to allow the composite material blank 16 to change shape and cure the composite material blank 16, which will be discussed further below. As such, the tooling assembly 10 includes a heater 28 configured to heat the composite material blank 16. As non-limiting examples, the heater 28 may be an oven, an autoclave, out-of-autoclave integral heating, or any other suitable heater 28. For illustrative purposes, the evenly spaced dashed box of FIG. 2 is to provide an example heater 28.

Referring to FIGS. 1 and 2, the tooling assembly 10 includes a shape memory alloy (SMA) structure 30 incorporated into the platform 14 and configured to move in response to heating which correspondingly changes a shape of the platform 14.

The SMA structure 30 may be formed of any suitable SMA material. For example, the SMA material may include one or more alloys, including materials such as copper, aluminum, nickel, nickel-titanium, zinc, gold, iron, copper-aluminum-nickel, copper-zinc-aluminum, iron-manganese-silicon, or any other suitable material being deformable and returnable to an original shape.

Generally, the SMA structure 30 is initially disposed linearly within the platform 14 such that the platform 14 lays substantially flat for the start of the forming process. More specifically, the SMA structure 30 is disposed in an initial state at a first threshold temperature when unheated, in which the SMA structure 30 is disposed linearly within the platform 14 so that the platform 14 lays substantially flat. Therefore, the platform 14 is disposed in the substantially flat orientation when the SMA structure 30 is in the initial state, and thus, the composite material blank 16 is disposed on the platform 14 in the substantially flat orientation when the SMA structure 30 is in the initial state.

The SMA structure 30 is disposed in a secondary state when heated via the heater 28 to a second threshold temperature. Therefore, the SMA structure 30 is capable of being bent, deformed, and/or stretched, without permanent deformation and without breaking, to the initial state and the secondary state. The SMA structure 30 may be trained to return to a pre-defined shape, i.e., the secondary state, when heated, and thus, return to the deformed linear orientation at the initial state when unheated or cooled down. The SMA structure 30 may be heated and cooled multiple times to move the SMA structure 30 between the initial state and the secondary state. Generally, the SMA structure 30 remembers the shape the structure 30 is deformable to and returnable to. That is, the SMA structure 30 remembers the geometry of the structure 30 in the secondary state and the initial state.

The composite material blank 16 is movable with the platform 14 to a transformed state in response to the SMA structure 30 moving to the secondary state to form and cure the composite material blank 16 into the composite preform 12 relative to the secondary state of the SMA structure 30. More specifically, while the vacuum 24 is activated to expel the gaseous fluid out of the space 26 to hold the composite material blank 16 against the platform 14, the composite material blank 16 moves with the platform 14 from the initial state to the secondary state, and thus, moves the composite material blank 16 to the transformed state. While the composite material blank 16 is attached to the SMA structure 30, both forming and curing occurs to consolidate these processes into one process step while on the SMA structure 30, which thus, eliminates having to move the composite material blank 16 to certain components for forming and then to different components for curing. The platform 14 is formed of the flexible material which allows the platform 14 to move between the substantially flat orientation and the transformed state in response to movement of the SMA structure 30. That is, the platform 14 may bend due to the flexible material to move the platform 14 between the substantially flat orientation and the transformed state in response to movement of the SMA structure 30.

Once the composite material blank 16 moves to the transformed state, due to the SMA structure 30 reaching the secondary state, the composite material blank 16 remains in the transformed state via the SMA structure 30 such that the composite material blank 16 may be cured, via heating from the heater 28, which sets the profile of the composite preform 12. As such, the composite preform 12 remains secured to the platform 14 during curing and the composite preform 12 does not return to the initial state once the profile is set, but the SMA structure 30 and the platform 14 are returnable to the initial state to transform another composite material blank to another composite preform.

In certain configurations, the SMA structure 30 includes at least one wire 32 embedded into the platform 14. In other configurations, the at least one wire 32 is further defined as a plurality of wires 32 spaced from each other with each of the wires 32 embedded into the platform 14. The figures illustrate the SMA structure 30 as wires 32, but it is to be appreciated that the SMA structure 30 may be any suitable configuration, and other non-limiting examples of the SMA structure 30 may include one or more bars, plates, wires 32, round shapes, square shapes, rectangular shapes, or combinations thereof.

In addition, the SMA structure 30 may have one or more different thicknesses and/or densities along the platform 14 to accommodate for one or more different thicknesses and/or densities of the composite material blank 16. For example, the SMA structure 30 may be thicker and/or denser under thicker and/or denser areas of the composite material blank 16. As another example, the SMA structure 30 may be thinner and/or less dense under thinner and/or less dense areas of the composite material blank 16. Furthermore, when implementing a plurality of SMA structures 30, such as the wires 32 or any other suitable SMA structures, the SMA structures 30 may be spaced from each other any suitable distance, and as non-limiting examples, the SMA structures 30 may be evenly spaced from each other, may have locations of more concentrated numbers of SMA structures 30, may have locations of less concentrated numbers SMA structures 30, etc.

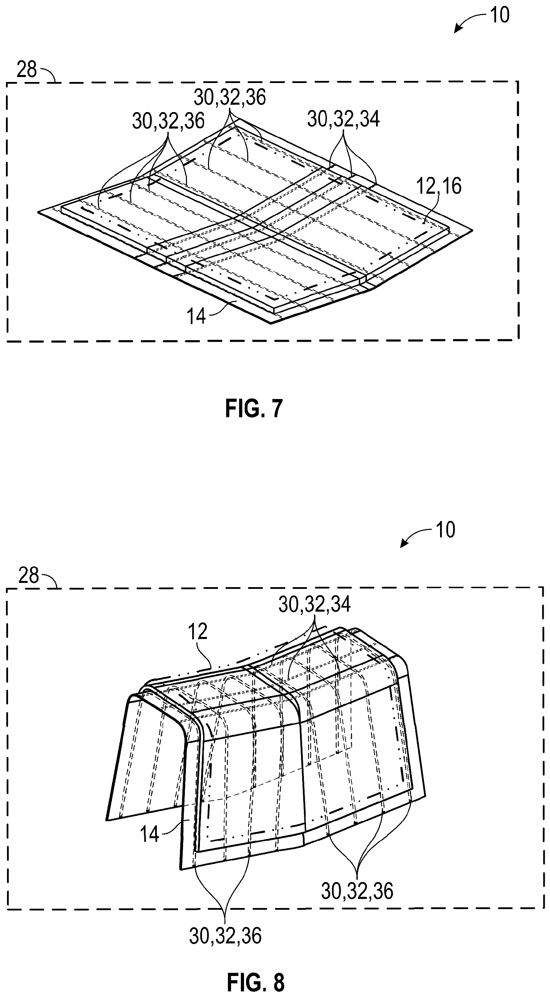

In certain configurations, multiple movements may be incorporated into the SMA structure 30 to move the platform 14 in multiple different ways. For example, the SMA structure 30 may be split into a plurality of groups 34, 36 to cause multiple orientation changes to the platform 14, and thus, also causes multiple orientation changes to the composite material blank 16. Referring to FIGS. 7 and 8, a first group 34 of the wires 32 are disposed in a first orientation within the platform 14, and a second group 36 of the wires 32 are disposed in a second orientation within the platform 14. In certain configurations, the first orientation and the second orientation are different from each other. In other configurations, the first orientation and the second orientation may be substantially parallel to each other. For example, in one configuration, the first orientation and the second orientation may be substantially perpendicular to each other.

Optionally, the first group 34 and the second group 36 may be activated to move to the secondary state at different temperatures. The heater 28 may output heat to different temperatures to cause the first group 34 and the second group 36 to move at different temperatures. For example, the SMA structure 30 may include a first stage in which the first group 34 of the wires 32 are movable to the secondary state at a first stage threshold temperature of the second threshold temperature. Additionally, the SMA structure 30 may include a second stage in which the second group 36 of the wires 32 are movable to the secondary state at a second stage threshold temperature of the second threshold temperature. Generally, in various configurations, the second threshold temperature is greater than the first threshold temperature.

In certain configurations, the first stage may occur before the second stage, and in this configuration, the first stage threshold temperature is less than the second stage threshold temperature. In other configurations, the second stage may occur before the first stage, and in this configuration, the second stage threshold temperature is less than the first stage threshold temperature. In yet other configurations, the first stage and the second stage may occur simultaneously, and in this configuration, the first stage threshold temperature and the second stage threshold temperature are substantially the same.

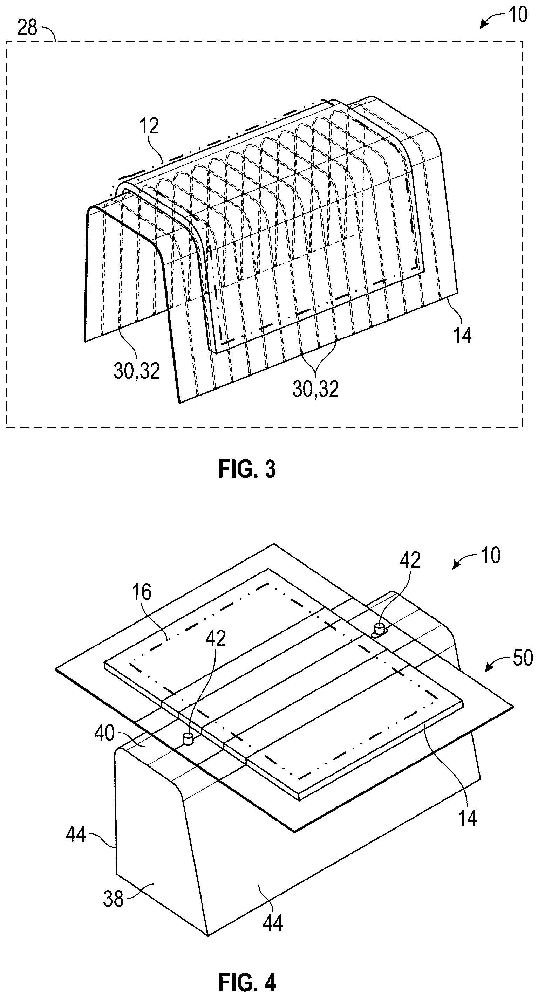

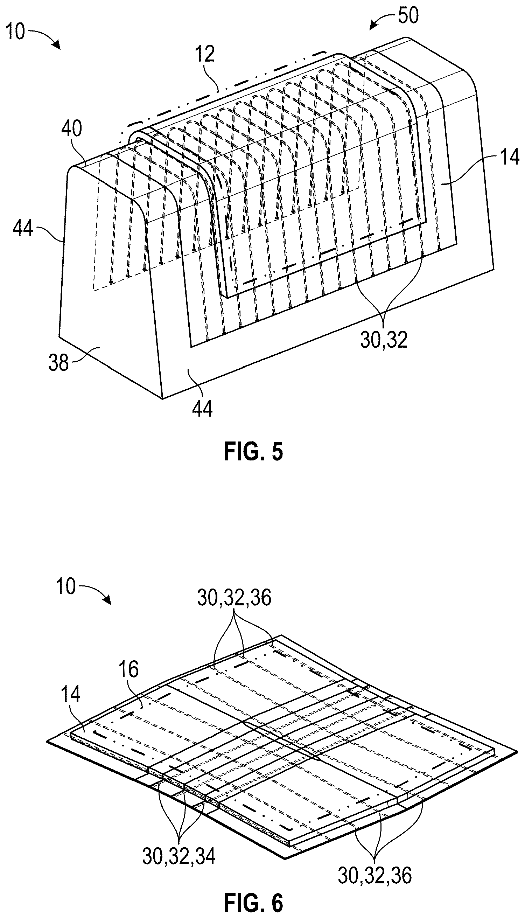

Referring to FIGS. 4 and 5, optionally, the SMA structure 30, with the platform 14, may be disposed on a support structure, such as a frame 38, to transform the composite material blank 16 to the composite preform 12. Therefore, the tooling assembly 10 may include the frame 38 having a configuration that complements the transformed state to assist in forming the composite material blank 16 into the composite preform 12. The frame 38 is formed of a rigid material to maintain the configuration of the frame 38 during the forming/curing process, which assists in obtaining the final profiles of the composite preform 12. The rigid material of the frame 38 may include one or more of metals, composites, or any other material(s) to maintain the configuration of the frame 38 during the forming/curing process.

The platform 14 (SMA structure 30) is initially disposed on the frame 38 in the initial state, in which the platform 14 is substantially flat relative to a first surface 40 of the frame 38 (see FIG. 4). That is, the platform 14 is disposed across the first surface 40. Optionally, the first surface 40 and the platform 14 may present locating features 42 to attach the platform 14 (SMA structure 30) to the frame 38 and/or to provide repeatable positioning of the platform 14 relative to the first surface 40 of the frame 38. The locating features 42 may be any suitable configuration, and non-limiting examples may include posts, apertures, or any other features to attach the platform 14 (SMA structure 30) to the frame 38 and/or provide repeatable positioning of the platform 14 relative to the frame 38.

Referring to FIG. 5, when the heater 28 heats the SMA structure 30 to the secondary state, the composite material blank 16 and the platform 14 deform around the frame 38 to form the desired profile of the composite preform 12. That is, the platform 14 may deform around the frame 38 to abut opposing second surfaces 44 of the frame 38. Optionally, the frame 38 may be plumbed for the vacuum 24 such that the zones are in fluid communication with different locations of the frame 38 in which one or more of the zones may be activated to apply the force F to the composite material blank 16 at the different locations.

A controller 46 (see FIG. 2) is in communication with the heater 28 and the vacuum 24, to control heating, cooling (via reducing or shutting off the heat), and the force F and/or the compaction pressure. For example, one or more sensors 48 may be coupled to the heater 28, the vacuum 24, the platform 14, the SMA structure 30, etc., to monitor temperature, force F, compaction pressure, etc. It is to be appreciated that the controller 46, the vacuum 24, and the heater 28 are omitted in some of the figures, but the controller 46, the vacuum 24, and the heater 28 would be in communication with the various components in those figures as well, which is described herein.

The controller 46 is configured to execute the instructions from memory M, via a processor P. For example, the controller 46 may be a host machine or distributed system, e.g., a computer such as a digital computer or microcomputer, and, as the memory M, tangible, non-transitory computer-readable memory such as read-only memory (ROM) or flash memory. The controller 46 may also have random access memory (RAM), electrically erasable programmable read-only memory (EEPROM), a high-speed clock, analog-to-digital (A/D) and/or digital-to-analog (D/A) circuitry, and any required input/output circuitry and associated devices, as well as any required signal conditioning and/or signal buffering circuitry. Therefore, the controller 46 may include all software, hardware, memory M, algorithms, connections, sensors 48, etc., necessary to control, for example, the heater 28 and the vacuum 24. As such, a control method operative to control the heater 28 and the vacuum 24, may be embodied as software or firmware associated with the controller 46. It is to be appreciated that the controller 46 may also include any device capable of analyzing data from various sensors 48, devices, comparing data, making the necessary decisions required to control and/or monitor the heater 28 and the vacuum 24. Optionally, more than one controller 46 may be implemented, and if a plurality of controller 46 are implemented, each of the controllers 46 may communicate with each other. In addition, optionally, the controller 46 may control the plurality of zones of the vacuum 24, to activate, adjust, or tailor, the force F applied to the composite material blank 16 at one or more of the zones. As such, the controller 46 may selectively activate the vacuum 24 at one or more of the zones.

The present disclosure also provides a method of forming and curing the composite preform 12 in a single process step. To start the process, the composite material blank 16 is disposed on the platform 14. More specifically, the composite material blank 16 and the platform 14 are disposed in the substantially flat orientation to start the forming process.

As discussed above, the SMA structure 30 is incorporated into the platform 14 and configured to move in response to heating which correspondingly changes the shape of the platform 14. The SMA structure 30 deforms or changes shape depending on the temperature. Therefore, as also discussed above, the SMA structure 30 is disposed in the initial state at the first threshold temperature when unheated and is disposed in the secondary state at the second threshold temperature when heated. Therefore, generally, the second threshold temperature is higher than the first threshold temperature.

To start the forming process, the SMA structure 30 is in the initial state, which disposes the platform 14 in the substantially flat orientation as shown in FIGS. 1, 2, and 4. As such, the SMA structure 30 is at or below the first threshold temperature when at the initial state, i.e., cool. Therefore, when the SMA structure 30 is in the initial state, the platform 14 is disposed in the substantially flat orientation and the composite material blank 16 disposed on the platform 14 in the substantially flat orientation. Heating occurs later to form the composite material blank 16 into the composite preform 12, which will be discussed below. That is, the platform 14 is in the substantially flat orientation with the composite material blank 16 disposed on the platform 14 in the substantially flat orientation before heating the SMA structure 30 to the second threshold temperature which also heats the composite material blank 16 to the second threshold temperature.

Optionally, the platform 14 (SMA structure 30) may be disposed on the support structure, such as the frame 38. As such, if implementing the frame 38, the platform 14 (SMA structure 30) is initially disposed on the frame 38 in the initial state, in which the platform 14 is substantially flat. More specifically, the platform 14 (SMA structure 30) may be attached to the frame 38 via the locating features 42. Again, the composite material blank 16 is disposed on the platform 14 in the substantially flat orientation at this point.

Next, the membrane 22 is disposed across the composite material blank 16 to contain the composite material blank 16 between the platform 14 and the membrane 22. The membrane 22 may be attached to the platform 14 to prevent gaseous fluid leaks therebetween. Optionally, one or more of the release films 18 may be implemented to overlap one or more of the sides 20 of the composite material blank 16. In certain configurations, the composite material blank 16 is disposed between a pair of the release films 18. The membrane 22 overlaps the release films 18 and the composite material blank 16 such that the platform 14 and the membrane 22 contains the release films 18 and the composite material blank 16.

Then, the vacuum 24 is activated to expel the gaseous fluid out of the space 26 between the membrane 22 and the platform 14 to hold the composite material blank 16 against the platform 14 during movement between the initial state and the transformed state. That is, the membrane 22 applies a pressure to the composite material blank 16 to secure the composite material blank 16 to the platform 14. More specifically, the membrane 22 is suctioned toward the platform 14 when the vacuum 24 is creating the pressure difference, which applies the force F to the composite material blank 16 which pushes the composite material blank 16 into the platform 14. Therefore, while the vacuum 24 is activated, the composite material blank 16 remains secured to the platform 14. At this point, the platform 14 is disposed in the substantially flat orientation with the composite material blank 16 disposed on the platform 14 in the substantially flat orientation due to the SMA structure 30 being in the initial state, i.e., cool, while the vacuum 24 is activated to expel the gaseous fluid out of the space 26.

Turning back to the frame 38, if the frame 38 is implemented, and the SMA structure 30 is in the initial state such that the platform 14 is substantially flat as shown in FIG. 4, next, the vacuum 24 is activated to hold the composite material blank 16 against the platform 14 to define a sub-assembly 50 in the substantially flat orientation. More specifically, the vacuum 24 causes the membrane 22 to apply the pressure to the composite material blank 16 to hold the composite material blank 16 to the platform 14. That is, the membrane 22 is suctioned toward the platform 14 when the vacuum 24 is creating the pressure difference, which applies the force F to the composite material blank 16 which pushes the composite material blank 16 into the platform 14 on the frame 38. Therefore, while the vacuum 24 is activated, the composite material blank 16 remains secured to the platform 14 on the frame 38. Initially, the sub-assembly 50 is disposed in the substantially flat orientation on the frame 38 as shown in FIG. 4.

Next, the heater 28 is activated to heat the composite material blank 16 to change a shape of the composite material blank 16. Generally, heating via the heater 28 occurs after activating the vacuum 24. More specifically, the heater 28 heats the SMA structure 30, and thus, the composite material blank 16, to the second threshold temperature after activating the vacuum 24 to expel the gaseous fluid out of the space 26.

Heating the composite material blank 16 causes the composite material blank 16 to soften and more easily change the shape of the composite material blank 16 in response to movement of the platform 14 via the SMA structure 30. That is, the SMA structure 30 is heated, via the heater 28, to the second threshold temperature to move to the secondary state which correspondingly causes the composite material blank 16 to move with the platform 14 to the transformed state to form and cure the composite material blank 16 into the composite preform 12 relative to the secondary state of the SMA structure 30. As mentioned above, the platform 14 is formed of the flexible material, and the flexible material of the platform 14 is bendable to move the platform 14 between the substantially flat orientation and the transformed state in response to movement of the SMA structure 30. While the composite material blank 16 is attached to the SMA structure 30, both forming and curing occurs to consolidate these processes into one process step while on the SMA structure 30, which thus, eliminates having to move the composite material blank 16 to certain components for forming and then to different components for curing. The composite material blank 16 on the platform 14 may be disposed inside of an oven, an autoclave, or heated by the heater 28 in any other suitable way.

Turning back to the frame 38, if the frame 38 is implemented, the frame 38 has a configuration that complements the transformed state. That is, the frame 38 is rigid to maintain the desired final configuration that the composite preform 12 is to achieve in this forming/curing process. As such, initially (before heating), the sub-assembly 50 is not complementary to the configuration of the frame 38. The heater 28 is activated to heat the composite material blank 16 and the SMA structure 30 after the sub-assembly 50 is disposed on the frame 38. Once the second threshold temperature is reached, the SMA structure 30 moves to the secondary state, which correspondingly causes the platform 14 and the composite material blank 16 to move to the transformed state. The composite material blank 16 moves more readily to the transformed state due to heating softening the composite material blank 16, and thus, making the material more malleable. Optionally, the one or more zones of the vacuum 24 plumbed to the frame 38 may be activated while the composite material blank 16 forms around the frame 38 to assist in obtaining the desired profile of the composite material blank 16.

In certain configurations, the SMA structure 30 may include the plurality of wires 32 spaced from each other with each of the wires 32 embedded into the platform 14. Regardless of whether the frame 38 is implemented, any of the configurations herein may implement the wires 32 as the SMA structure 30. When the SMA structure 30 implements wires 32, heating causes the wires 32 to move to the secondary state. Therefore, the wires 32 of the SMA structure 30 is heated, via the heater 28, to the second threshold temperature to move to the secondary state which correspondingly causes the composite material blank 16 to move with the platform 14 to the transformed state.

If the wires 32 are split into groups 34, 36 as shown in FIGS. 6-8, the wires 32 of the SMA structure 30 may be disposed linearly in the initial state, which disposes the platform 14 substantially flat (see FIG. 6). The first group 34 of the wires 32 may be heated to the first stage threshold temperature of the second threshold temperature in the first stage to move the first group 34 of the wires 32 to the secondary state (see FIG. 7), in which, the second group 36 of the wires 32 remain unchanged. Additionally, the second group 36 of the wires 32 may be heated to the second stage threshold temperature of the second threshold temperature in the second stage move the second group 36 of the wires 32 to the secondary state (see FIG. 8), in which, the first group 34 of the wires 32 remain in the orientation achieved in the first stage (compare FIGS. 7 and 8). Therefore, the wires 32 of the SMA structure 30 is heated, via the heater 28, in two stages, i.e., the first stage and the second stage, to move to the secondary state which correspondingly causes the platform 14 to move in stages to transform the composite material blank 16 to the transformed state. In certain configurations, the first stage threshold temperature and the second stage threshold temperature are different from each other. For example, the first stage threshold temperature may be less than the second stage threshold temperature, but both of the first stage threshold temperature and the second stage threshold temperature are higher than the first threshold temperature.

Regardless of whether the frame 38 is implemented, and regardless of whether the SMA structure 30 is split into groups 34, 36, once the desired profile of composite material blank 16 is reached, the composite material blank 16 may be cured to form the composite preform 12. The composite material blank 16 remains on the platform 14 in the transformed state to complete the curing process. Therefore, the contour profiles of the platform 14 achieved in the transformed state allow the formation of complex composite preforms 12. Non-limiting examples of complex composite preforms 12 are C-shaped channels, Z-shaped channels, J-shaped channels, U-shaped channels, I-shaped channels, L-shaped channels, any suitable curved-shaped channels, Z frames, Z stiffeners, blades, bubble shaped, wing surfaces, or any other suitable shapes.

Generally, the heater 28 is also implemented to cure the composite preform 12, and thus, the composite material blank 16 on the platform 14 may be disposed inside of the oven, the autoclave, or heated by the heater 28 in any other suitable way. Optionally, the heater 28 may heat the composite material blank 16 to a third threshold temperature greater than the second threshold temperature to cure the composite preform 12 while remaining in the transformed state. As such, the forming and curing processes may be consolidated into one, single process step because the composite material blank 16 attached to the SMA structure 30 may be formed and cured using the heater 28 and does not need to be moved to complete these processes separately.

Next, the composite preform 12 is cooled after forming and curing the composite preform 12. Once the composite preform 12 is cured, the vacuum 24 may be deactivated. That is, the vacuum 24 is deactivated to release the membrane 22 from the composite preform 12. Once the composite preform 12 is cooled to the desired cooled temperature, after the vacuum 24 is deactivated, the composite preform 12 is removed from the platform 14. More specifically, the membrane 22 is removed, and the release film 18 is removed (if implemented), and then the completed composite preform 12 is removed from the platform 14. The cured composite preform 12 will be rigid at this point, and therefore, the cured composite preform 12 will not be affected by any orientation changes, i.e., coefficient of thermal expansion, of the SMA structure 30/the platform 14 during cooling. This forming/curing process described herein may be implemented to form the complex composite preforms 12.

Once the completed composite preform 12 is removed from the platform 14, the SMA structure 30 may continue to be cooled to the first threshold temperature to return the SMA structure 30 to the initial state, i.e., reverts to its memory shape, which corresponds returns the platform 14 to the flat configuration to repeat this process again to transform another composite material blank to another composite preform.

It is to be appreciated that the order or sequence of performing the method as described herein is for illustrative purposes and other orders or sequences are within the scope of the present teachings. It is to also be appreciated that the method may include other features not specifically identified immediately above.

While the best modes and other configurations for carrying out the disclosure have been described in detail, those familiar with the art to which this disclosure relates will recognize various alternative designs and configurations for practicing the disclosure within the scope of the appended claims. Furthermore, the configurations shown in the drawings or the characteristics of various configurations mentioned in the present description are not necessarily to be understood as configurations independent of each other. Rather, it is possible that each of the characteristics described in one of the examples of a configuration can be combined with one or a plurality of other desired characteristics from other configurations, resulting in other configurations not described in words or by reference to the drawings. Accordingly, such other configurations fall within the framework of the scope of the appended claims.

As used herein, a system, apparatus, structure, article, element, component, or hardware "configured to" perform a specified function is indeed capable of performing the specified function without any alteration, rather than merely having potential to perform the specified function after further modification. In other words, the system, apparatus, structure, article, element, component, or hardware "configured to" perform a specified function is specifically selected, created, implemented, utilized, programmed, and/or designed for the purpose of performing the specified function. As used herein, "configured to" denotes existing characteristics of a system, apparatus, structure, article, element, component, or hardware that enable the system, apparatus, structure, article, element, component, or hardware to perform the specified function without further modification. For purposes of this disclosure, a system, apparatus, structure, article, element, component, or hardware described as being "configured to" perform a particular function may additionally or alternatively be described as being "adapted to" and/or as being "operative to" perform that function.

The following Clauses provide some example configurations of the tooling assembly 10 and the method as disclosed herein.

Clause 1: A tooling assembly for forming and curing a composite preform in a single process step, the tooling assembly comprising: a platform; a composite material blank disposed on the platform; a membrane disposed across the composite material blank to contain the composite material blank between the platform and the membrane; a heater configured to heat the composite material blank; and a shape memory alloy (SMA) structure incorporated into the platform and configured to move in response to heating which changes a shape of the platform, wherein the SMA structure is disposed in an initial state at a first threshold temperature when unheated and is disposed in a secondary state when heated via the heater to a second threshold temperature, wherein the composite material blank is movable with the platform to a transformed state in response to the SMA structure moving to the secondary state to form and cure the composite material blank into the composite preform relative to the secondary state of the SMA structure.

Clause 2: The tooling assembly as set forth in clause 1 further including a vacuum in fluid communication with a space between the membrane and the platform, and the vacuum is configured to expel a gaseous fluid out of the space to hold the composite material blank against the platform between the initial state and the transformed state.

Clause 3: The tooling assembly as set forth in clause 1 or 2 wherein the platform is disposed in a substantially flat orientation when the SMA structure is in the initial state.

Clause 4: The tooling assembly as set forth in any one of clauses 1-3 wherein the platform is formed of a flexible material which allows the platform to move between the substantially flat orientation and the transformed state in response to movement of the SMA structure.

Clause 5: The tooling assembly as set forth in any one of the preceding clauses wherein the SMA structure includes at least one wire embedded into the platform.

Clause 6: The tooling assembly as set forth in clause 5 wherein the at least one wire is further defined as a plurality of wires spaced from each other with each of the wires embedded into the platform.

Clause 7: The tooling assembly as set forth in clause 6: wherein a first group of the wires are disposed in a first orientation within the platform and a second group of the wires are disposed in a second orientation within the platform, wherein the first orientation and the second orientation are different from each other; wherein the SMA structure includes a first stage in which the first group of the wires are movable to the secondary state at a first stage threshold temperature of the second threshold temperature; and wherein the SMA structure includes a second stage in which the second group of the wires are movable to the secondary state at a second stage threshold temperature of the second threshold temperature.

Clause 8: The tooling assembly as set forth in any one of the preceding clauses further comprising a frame having a configuration that complements the transformed state to assist in forming the composite material blank into the composite preform.

Clause 9: The tooling assembly as set forth in any one of the preceding clauses wherein the second threshold temperature is greater than the first threshold temperature.

Clause 10: A method of forming and curing a composite preform in a single process step, the method comprising: disposing a composite material blank on a platform, wherein a shape memory alloy (SMA) structure is incorporated into the platform and configured to move in response to heating which correspondingly changes a shape of the platform, wherein the SMA structure is disposed in an initial state at a first threshold temperature when unheated and is disposed in a secondary state at a second threshold temperature when heated; disposing a membrane across the composite material blank to contain the composite material blank between the platform and the membrane; and heating, via a heater, the SMA structure to the second threshold temperature to move to the secondary state which correspondingly causes the composite material blank to move with the platform to a transformed state to form and cure the composite material blank into the composite preform relative to the secondary state of the SMA structure.

Clause 11: The method as set forth in clause 10 further comprising activating a vacuum to expel a gaseous fluid out of a space between the membrane and the platform to hold the composite material blank against the platform during movement between the initial state and the transformed state.

Clause 12: The method as set forth in clause 10 or 11 wherein heating via the heater occurs after activating the vacuum.

Clause 13: The method as set forth in any one of clauses 10-12 further comprising: heating, via the heater, the composite material blank to a third threshold temperature greater than the second threshold temperature to cure the composite preform; cooling the composite preform after forming and curing the composite preform; deactivating the vacuum to release the membrane; and removing the composite preform from the platform after deactivating the vacuum.

Clause 14: The method as set forth in any one of clauses 10-13 wherein: disposing the composite material blank on the platform further comprises disposing the platform in a substantially flat orientation with the composite material blank disposed on the platform in a substantially flat orientation when the SMA structure is in the initial state; and disposing the platform in the substantially flat orientation with the composite material blank disposed on the platform in the substantially flat orientation occurs before heating the composite material blank to the second threshold temperature.

Clause 15: The method as set forth in clause 14: further comprising activating a vacuum to expel a gaseous fluid out of a space between the membrane and the platform to hold the composite material blank against the platform during movement between the initial state and the transformed state; and wherein disposing the platform in the substantially flat orientation with the composite material blank disposed on the platform in the substantially flat orientation occurs before activating the vacuum to expel the gaseous fluid out of the space.

Clause 16: The method as set forth in clause 15 wherein heating, via the heater, the composite material blank to the second threshold temperature occurs after activating the vacuum to expel the gaseous fluid out of the space.

Clause 17: The method as set forth in any one of clauses 10-16 wherein the platform is formed of a flexible material and further comprising bending the flexible material of the platform to move the platform between the substantially flat orientation and the transformed state in response to movement of the SMA structure.

Clause 18: The method as set forth in any one of clauses 10-17 wherein: the SMA structure includes a plurality of wires spaced from each other with each of the wires embedded into the platform; and heating the SMA structure further comprises heating the wires of the SMA structure to the second threshold temperature to move to the secondary state which correspondingly moves the composite material blank with the platform to the transformed state.

Clause 19: The method as set forth in clause 18 wherein: a first group of the wires are disposed in a first orientation within the platform; a second group of the wires are disposed in a second orientation within the platform; the first orientation and the second orientation are different from each other; heating the composite material blank to cause the wires of the SMA structure to move to the secondary state further comprises heating the first group of the wires to a first stage threshold temperature of the second threshold temperature in a first stage to move the first group of the wires to the secondary state; heating the composite material blank to cause the wires of the SMA structure to move to the secondary state further comprises heating the second group of the wires to a second stage threshold temperature of the second threshold temperature in a second stage move the second group of the wires to the secondary state; and the first stage threshold temperature and the second stage threshold temperature are different from each other.

Clause 20: The method as set forth in any one of clauses 10-19: further including a frame having a configuration that complements the transformed state; wherein activating the vacuum holds the composite material blank against the platform to define a sub-assembly in the substantially flat orientation; further comprising disposing the sub-assembly in the substantially flat orientation on the frame; and wherein heating via the heater occurs after disposing the sub-assembly on the frame.

## Claims

1. A tooling assembly (10) for forming and curing a composite preform (12) in a single process step, the tooling assembly (10) comprising:
a platform (14);
a composite material blank (16) disposed on the platform (14);
a membrane (22) disposed across the composite material blank (16) to contain the composite material blank (16) between the platform (14) and the membrane (22);
a heater (28) configured to heat the composite material blank (16); and
a shape memory alloy (SMA) structure (30) incorporated into the platform (14) and configured to move in response to heating which changes a shape of the platform (14), wherein the SMA structure (30) is disposed in an initial state at a first threshold temperature when unheated and is disposed in a secondary state when heated via the heater (28) to a second threshold temperature, wherein the composite material blank (16) is movable with the platform (14) to a transformed state in response to the SMA structure (30) moving to the secondary state to form and cure the composite material blank (16) into the composite preform (12) relative to the secondary state of the SMA structure (30).

2. The tooling assembly (10) according to claim 1, further comprising:
a vacuum (24) in fluid communication with a space (26) between the membrane (22) and the platform (14), and the vacuum (24) is configured to expel a gaseous fluid out of the space (26) to hold the composite material blank (16) against the platform (14) between the initial state and the transformed state.

3. The tooling assembly (10) according to claim 1 or 2, wherein the platform (14) is disposed in a substantially flat orientation when the SMA structure (30) is in the initial state,
wherein the platform (14) is formed of a flexible material which allows the platform (14) to move between the substantially flat orientation and the transformed state in response to movement of the SMA structure (30).

4. The tooling assembly (10) according to any one of claims 1 to 3, wherein the SMA structure (30) comprises at least one wire (32) embedded into the platform (14); or
wherein the SMA structure (30) comprises a plurality of wires (32) spaced from each other with each of the wires (32) embedded into the platform (14).

5. The tooling assembly (10) according to claim 4, wherein when the SMA structure (30) comprises the plurality of wires (32),
a first group (34) of the wires (32) are disposed in a first orientation within the platform (14) and a second group (36) of the wires (32) are disposed in a second orientation within the platform (14), wherein the first orientation and the second orientation are different from each other;
wherein the SMA structure (30) comprises a first stage in which the first group (34) of the wires (32) are movable to the secondary state at a first stage threshold temperature of the second threshold temperature; and
wherein the SMA structure (30) comprises a second stage in which the second group (36) of the wires (32) are movable to the secondary state at a second stage threshold temperature of the second threshold temperature.

6. The tooling assembly (10) according to any one of claims 1 to 5, further comprising a frame (38) having a configuration that complements the transformed state to assist in forming the composite material blank (16) into the composite preform (12).

7. A method of forming and curing a composite preform (12) in a single process step, the method comprising:
disposing a composite material blank (16) on a platform (14), wherein a shape memory alloy (SMA) structure (30) is incorporated into the platform (14) and configured to move in response to heating which correspondingly changes a shape of the platform (14), wherein the SMA structure (30) is disposed in an initial state at a first threshold temperature when unheated and is disposed in a secondary state at a second threshold temperature when heated;
disposing a membrane (22) across the composite material blank (16) to contain the composite material blank (16) between the platform (14) and the membrane (22); and
heating, via a heater (28), the SMA structure (30) to the second threshold temperature to move to the secondary state which correspondingly causes the composite material blank (16) to move with the platform (14) to a transformed state to form and cure the composite material blank (16) into the composite preform (12) relative to the secondary state of the SMA structure (30).

8. The method according to claim 7, further comprising activating a vacuum (24) to expel a gaseous fluid out of a space (26) between the membrane (22) and the platform (14) to hold the composite material blank (16) against the platform (14) during movement between the initial state and the transformed state.

9. The method according to claim 8, further comprising:
heating, via the heater (28), the composite material blank (16) to a third threshold temperature greater than the second threshold temperature to cure the composite preform (12);
cooling the composite preform (12) after forming and curing the composite preform (12); deactivating the vacuum (24) to release the membrane (22); and
removing the composite preform (12) from the platform (14) after deactivating the vacuum (24).

10. The method according to any one of claims 7 to 9, wherein disposing the composite material blank (16) on the platform (14) further comprises:
disposing the platform (14) in a substantially flat orientation with the composite material blank (16) disposed on the platform (14) in a substantially flat orientation when the SMA structure (30) is in the initial state; and
disposing the platform (14) in the substantially flat orientation with the composite material blank (16) disposed on the platform (14) in the substantially flat orientation occurs before heating the composite material blank (16) to the second threshold temperature.

11. The method according to 10, further comprising:
activating a vacuum (24) to expel a gaseous fluid out of a space (26) between the membrane (22) and the platform (14) to hold the composite material blank (16) against the platform (14) during movement between the initial state and the transformed state; and
wherein disposing the platform (14) in the substantially flat orientation with the composite material blank (16) disposed on the platform (14) in the substantially flat orientation occurs before activating the vacuum (24) to expel the gaseous fluid out of the space (26).

12. The method according to claim 11, wherein heating, via the heater (28), the composite material blank (16) to the second threshold temperature occurs after activating the vacuum (24) to expel the gaseous fluid out of the space (26).

13. The method according to any one of claims 7 to 12, wherein the platform (14) is formed of a flexible material, the method further comprising:
bending the flexible material of the platform (14) to move the platform (14) between the substantially flat orientation and the transformed state in response to movement of the SMA structure (30).

14. The method according to any one of claims 7 to 13, wherein:
the SMA structure (30) includes a plurality of wires (32) spaced from each other with each of the wires (32) embedded into the platform (14); and
heating the SMA structure (30) further comprises heating the wires (32) of the SMA structure (30) to the second threshold temperature to move to the secondary state which correspondingly moves the composite material blank (16) with the platform (14) to the transformed state.

15. The method according to claim 14, wherein:
a first group (34) of the wires (32) are disposed in a first orientation within the platform (14);
a second group (36) of the wires (32) are disposed in a second orientation within the platform (14); and
the first orientation and the second orientation are different from each other;
wherein heating the composite material blank (16) to cause the wires (32) of the SMA structure (30) to move to the secondary state further comprises: heating the first group (34) of the wires (32) to a first stage threshold temperature of the second threshold temperature in a first stage to move the first group (34) of the wires (32) to the secondary state;
wherein heating the composite material blank (16) to cause the wires (32) of the SMA structure (30) to move to the secondary state further comprises: heating the second group (36) of the wires (32) to a second stage threshold temperature of the second threshold temperature in a second stage move the second group (36) of the wires (32) to the secondary state; and
wherein the first stage threshold temperature and the second stage threshold temperature are different from each other.
